# EUROPÄISCHE PATENTSCHRIFT

(11) **EP 0 436 780 B1**
(45) Veröffentlichungstag und Bekanntmachung des Hinweises auf die Patenterteilung: **24.11.1993**
(21) Anmeldenummer: 90117813.7
(22) Anmeldetag: 15.09.1990
(51) Int. Cl.: F16F 13/00

(54) **Motorlager mit hydraulischer Dämpfung**
Engine mount with hydraulic damping
Support de moteur à amortissement hydraulique

(30) Priorität: 02.12.1989 DE 3940004
(43) Veröffentlichungstag der Anmeldung: 17.07.1991
(73) Patentinhaber: Firma Carl Freudenberg, 69469 Weinheim (DE)
(72) Erfinder: Hamaekers, Arno, D-6946 Gorxheimertal (DE); Hettler, Werner, D-6800 Mannheim 52 (DE); Simuttis, Arnold, Dr., D-6550 Bad Kreuznach (DE)

(56) Entgegenhaltungen:
- EP-A- 0 163 817
- DE-A- 2 113 382
- DE-A- 2 727 244
- DE-A- 2 844 424
- DE-A- 3 612 436
- FR-A- 2 238 870
- PATENT ABSTRACTS OF JAPAN vol. 5, no. 43 (M-60)(715) 23 März 1981, & JP-A-55 166541 (HITACHI DENSEN) 25 Dezember 1980,

## Beschreibung

Die Erfindung betrifft ein Motorlager mit hydraulischer Dämpfung, umfassend einen flüssigkeitsgefüllten Arbeits- und Ausgleichsraum, die durch eine nachgiebige Trennwand voneinander getrennt und durch eine Dämpfungsöffnung verbunden sind, wobei der Arbeitsraum und der Ausgleichsraum in Achsrichtung einander gegenüberliegend durch im wesentlichen unverformbare Kolben nach außen begrenzt sind, die jeweils durch einen flüssigkeitsundurchlässigen und elastisch verformbaren Ringkörper mit einem zentral angeordneten, ringförmigen Beschlagteil verbunden sind, wobei die Kolben durch eine die Trennwand parallel zur Bewegungsrichtung im Bereich einer Öffnung durchdringende Koppelstange starr verbunden sind und wobei die Trennwand außenseitig an dem Beschlagteil festgelegt ist.

Ein solches Motorlager ist aus der DE-OS 27 27 244 bekannt. Die damit erzielte Isolierung motorerregter, akustisch störender Schwingungen ist wenig befriedigend.

Der Erfindung liegt die Aufgabe zugrunde, ein solches Motorlager derart weiterzuentwickeln, daß sich eine verbesserte Isolierung akustisch störender, motorerregter Schwingungen ergibt.

Diese Aufgabe wird erfindungsgemäß bei einem Motorlager der eingangs genannten Art mit den kennzeichnenden Merkmalen von Anspruch 1 gelöst. Auf vorteilhafte Ausgestaltungen nehmen die Unteransprüche Bezug.

Bei dem erfindungsgemäßen Motorlager ist es vorgesehen, daß der den Ausgleichsraum begrenzende Kolben eine Kolbenfläche aufweist, die wenigstens so groß ist wie die Kolbenfläche der Trennwand, daß der im Bereich des Ausgleichsraumes zwischen dem Kolben und dem Beschlagteil vorgesehene Ringkörper aus einer in Achsrichtung nach außen vorgewölbten ersten Rollmembran besteht, daß die Trennwand aus einem in Achsrichtung in den Arbeitsraum vorgewölbten, zweiten Rollmembran besteht und daß die zweite Rollmembran im Bereich der Öffnung flüssigkeitsundurchlässig an der Koppelstange festgelegt ist. Die bestimmungsgemäß aufzunehmenden Lasten werden bei dem erfindungsgemäßen Motorlager durch diese Ausbildung ausschließlich durch die federelastischen Eigenschaften eines einzigen, den Arbeitsraum begrenzenden, elastischen Ringkörpers aufgenommen. Auch bei einem verkanteten Einbau können sich dadurch gegeneinander gerichtete Verspannungen im Inneren nicht ergeben. Motorerregte, akustisch störende Schwingungen höherer Frequenz lassen sich hierdurch in ausgezeichneter Weise isolieren.

Bei Einleitung von fahrbahnerregten Schwingungen großer Amplitude unterstützt der den Ausgleichsraum begrenzende Kolben infolge seines großen Querschnittes die Hindurchpressung von Flüssigkeitsbestandteilen durch die Dämpfungsöffnung. Schwingungen dieser Art werden dadurch in ausgezeichneter Weise gedämpft.

Der den Ausgleichsraum begrenzende Kolben und die erste Rollmembran können einstückig ineinander übergehend ausgebildet sein und beispielsweise aus Gummi bestehen. Die Herstellung ist hierdurch wesentlich vereinfacht.

Als zweckmäßig hat es sich erwiesen, wenn der Kolben durch eine Armierung versteift ist, beispielsweise durch ein in das Innere einvulkanisiertes Versteifungsblech. Neben einer Verbesserung der Formbeständigkeit wird hierdurch die Herstellung einer formstabilen Verbindung zu der Koppelstange vereinfacht.

Die Trennwand kann im Bereich ihrer Öffnung durch einen Wulst begrenzt sein, wobei der Wulst elastisch aufgeweitet und unter einer inneren Vorspannung an die Koppelstange angepreßt ist. Die Anwendung sekundärer Abdichtungsmittel zur Erzielung einer flüssigkeitsdichten Verbindung zwischen der Trennwand und der Koppelstange ist in diesem Falle entbehrlich.

Eine besonders dichte Verbindung wird erhalten, wenn der Wulst die Koppelstange im Bereich einer Nut angepaßten Profils berührt. Der Wulst und die Koppelstange sind anschließend in axialer Richtung unverrückbar aneinander festgelegt, was für die Erzielung gleichbleibender Gebrauchseigenschaften über lange Zeiträume von großem Vorteil ist.

Nach einer anderen Ausgestaltung ist es vorgesehen, daß der Wulst die Koppelstange im Bereich eines Zylinderabschnittes berührt und relativ zu diesem beim Auftreten von Extremauslenkungen verschiebbar ist. Einer ungewollten Beschädigung der Trennwand wird hierdurch vorgebeugt.

Der den Ausgleichsraum begrenzende Kolben kann zwischen Anschlägen des Beschlagteiles angeordnet und nur zwischen denselben hin- und herbeweglich sein. Schwingungsausschlägen überhöhter Amplitude und insbesondere einem Zerreißen der Ringkörper läßt sich hierdurch wirksam begegnen.

Zur Vermeidung von Anschlaggeräuschen hat es sich als zweckmäßig erwiesen, wenn der Kolben und/oder die Anschläge auf den einander in Bewegungsrichtung zugewandten Flächen mit gummielastischen Anschlagpuffern versehen sind.

Der Gegenstand der Erfindung wird nachfolgend anhand der in der Anlage beigefügten Zeichnung weiter verdeutlicht. Es zeigen:

Figur 1
Ein Motorlager in längsgeschnittener Darstellung.

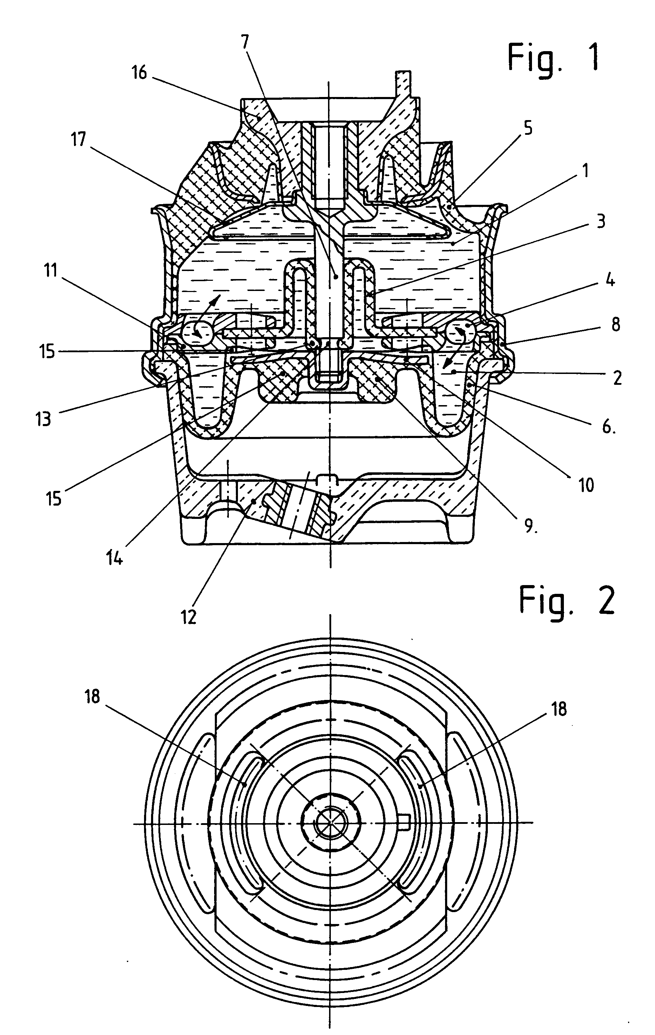

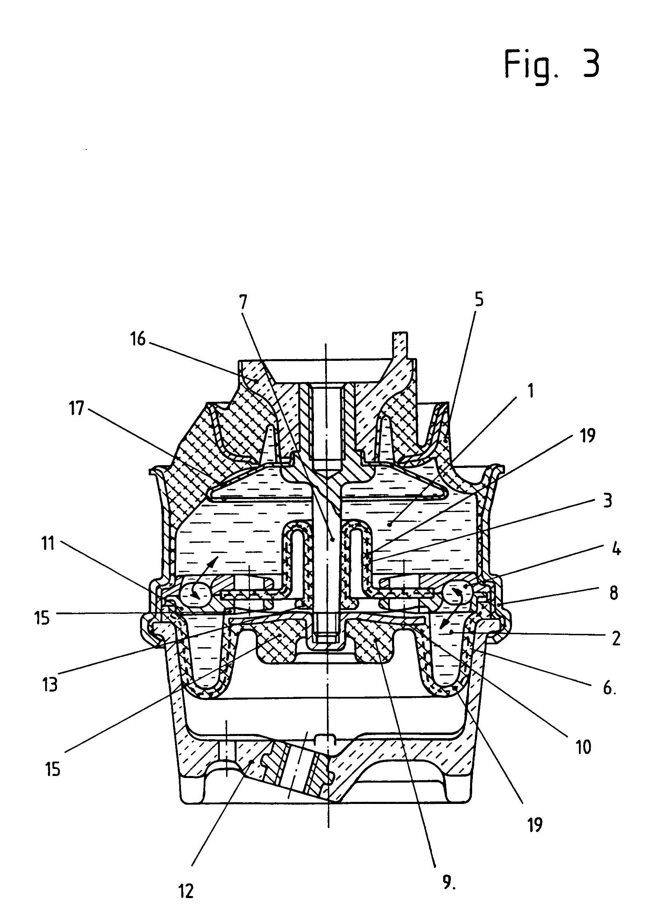

Figur 2
Das Motorlager nach Figur 1 in einer Ansicht von oben.

Das gezeigte Motorlager umfaßt einen flüssigkeitsgefüllten Arbeits- und Ausgleichsraum 1, 2, die durch eine nachgiebige Trennwand 3 voneinander getrennt und durch eine Dämpfungsöffnung 4 verbunden sind. Der Arbeitsraum 1 und der Ausgleichsraum 2 sind in Achsrichtung einander gegenüberliegend durch im wesentlichen unverformbare Kolben 16, 9 begrenzt, die jeweils durch einen flüssigkeitsundurchlässigen und elastisch verformbaren Ringkörper mit einem zentral angeordneten, ringförmigen Beschlagteil 8 verbunden sind. Die Kolben 16, 9 sind dabei durch eine die Trennwand parallel zur Achsrichtung im Bereich einer Öffnung durchdringende Koppelstange 7 starr verbunden und die Trennwand 3 ist außenseitig an dem Beschlagteil 8 festgelegt. Der den Ausgleichsraum 2 begrenzende Kolben 9 hat eine Kolbenfläche, die wenigstens so groß ist wie die Kolbenfläche der Trennwand 3, wobei der im Bereich des Ausgleichsraumes 2 zwischen dem Kolben 9 und dem Beschlagteil 8 vorgesehene Ringkörper 6 durch eine in Achsrichtung nach außen vorgewölbte, erste Rollmembran gebildet ist. Die Trennwand 3 besteht aus einer in Achsrichtung in den Arbeitsraum 1 vorgewölbten, zweiten Rollmembran, welche im Bereich ihrer Öffnung flüssigkeitsdicht an der Koppelstange 7 festgelegt ist. Der den Arbeitsraum 1 begrenzende Kolben 16 ist zugleich als Auflager ausgebildet und mit einem Innengewinde versehen, welches der Befestigung des abzustützenden Maschinenaggregates dient, beispielsweise des zu tragenden Verbrennungsmotors.

Der Beschlagteil 8 ist zugleich als Traglager ausgebildet und im unteren Bereich mit einem Innengewinde versehen, welches der Befestigung an dem zugehörigen Fundament dient, beispielsweise der Karosserie eines Kraftfahrzeuges.

An dem den Arbeitsraum 1 nach außen begrenzenden Kolben 16 ist zusätzlich ein in den Arbeitsraum 1 eintauchender, hydrodynamischer Bremskörper 17 vorgesehen, was die erzielte Dämpfungswirkung weiter vergrößert.

Der Arbeitsraum 1 ist nach außen durch einen federelastischen Ringkörper 5 begrenzt, der die bestimmungsgemäß zu tragende Last allein aufzunehmen vermag. Der Ringkörper ist quer zur Bewegungsrichtung mit einander gegenüberliegenden, nierenförmigen Ausnehmungen 18 versehen, die von der Oberseite in sein Profil eingreifen und ihm in dieser Richtung eine größere Nachgiebigkeit verleihen als in einer Richtung, die sich quer zu dieser Richtung erstreckt. Für die Verwendung des gezeigten Motorlagers in einem Kraftfahrzeug ist eine solche Ausbildung von Vorteil.

Das gezeigte Motorlager hat eine gute kardanische Nachgiebigkeit. Hochfrequente Schwingungen werden daher auch bei verkantetem Einbau gut isoliert und tieffrequente Schwingungen gut gedämpft.

Die in Figur 3 gezeigte Ausführung eines Motorlagers unterscheidet sich von der in Figur 1 gezeigten und vorstehend beschriebenen nur dadurch, daß die erste Rollmembran 6 und die zweite Rollmembran 3 jeweils durch eine hochflexible Gewebeeinlage 19 armiert sind. Ein Zerreißen beim Auftreten von Extremdrücken im Inneren des Motorlagers wird hierdurch unterbunden. Desweiteren ist die zweite Rollmembran 3 mit einem Wulst 13 versehen, der die Koppelstange 7 im Bereich eines Zylinderabschnittes berüht und relativ zu diesem nur beim Auftreten von Extremauslenkungen verschiebbar ist. Die hierzu erforderliche elastische Aufweitung des Wulstes während der Montage läßt sich anhand der einfachen Versuche ermitteln. Sie stellt sicher, daß auch beim Auftreten von Extremauslenkungen der durch das Motorlager verbundenen Teile Beschädigungen des Motorlagers vermieden werden. Derartige Extremauslenkungen können sich beispielsweise beim Überfahren einer Bordsteinkante ergeben.

## Patentansprüche

1. Motorlager mit hydraulischer Dämpfung, umfassend einen flüssigkeitsgefüllten Arbeits- und Ausgleichsraum, die durch eine nachgiebige Trennwand voneinander getrennt und durch eine Dämpfungsöffnung verbunden sind, wobei der Arbeitsraum und der Ausgleichsraum in Achsrichtung einander gegenüberliegend durch im wesentlichen unverformbare Kolben begrenzt sind, die jeweils durch einen flüssigkeitsundurchlässigen und elastisch verformbaren Ringkörper mit einem zentral angeordneten, ringförmigen Beschlagteil verbunden sind, wobei die Kolben durch eine die Trennwand parallel zur Bewegungsrichtung im Bereich einer Öffnung durchdringende Koppelstange starr verbunden sind und wobei die Trennwand außenseitig an dem Beschlagteil festgelegt ist, dadurch gekennzeichnet, daß der den Ausgleichsraum (2) begrenzende Kolben (9) eine Kolbenfläche aufweist, die wenigstens so groß ist wie die Kolbenfläche der Trennwand (3), daß der zwischen diesem Kolben (9) und dem Beschlagteil (8) vorgesehene Ringkörper durch eine in Achsrichtung nach außen vorgewölbte, erste Rollmembran (6) gebildet ist, daß die Trennwand (3) aus einer in Achsrichtung in den Arbeitsraum (1) vorgewölbten, zweiten Rollmembran besteht und daß die zweite Rollmembran im Bereich ihrer Öffnung flüssigkeitsdicht an der Koppelstange (7) festgelegt ist.

2. Motorlager nach Anspruch 1, dadurch gekennzeichnet, daß der Kolben (9) und die erste Rollmembran (6) einstückig ineinander übergehend ausgebildet sind.

3. Motorlager nach Anspruch 1 bis 2, dadurch gekennzeichnet, daß die erste Rollmembran (6) durch eine Gewebeeinlage armiert ist.

4. Motorlager nach Anspruch 1 bis 2, dadurch gekennzeichnet, daß der Kolben (9) durch eine Armierung (10) versteift ist.

5. Motorlager nach Anspruch 1 bis 2, dadurch gekennzeichnet, daß die Trennwand (3) im Bereich der Öffnung durch einen Wulst (13) begrenzt ist und daß der Wulst (13) elastisch aufgeweitet und unter einer inneren Vorspannung an die Koppelstange (7) angepreßt ist.

6. Motorlager nach Anspruch 5, dadurch gekennzeichnet, daß der Wulst (13) die Koppelstange (7) im Bereich einer Nut (14) angepaßten Profils berührt.

7. Motorlager nach Anspruch 5, dadurch gekennzeichnet, daß der Wulst (13) die Koppelstange (7) im Bereich eines sich parallel zur Bewegungsrichtung erstreckenden Zylinderabschnittes berührt und relativ zu diesem nur beim Auftreten von Extremauslenkungen verschiebbar ist.

8. Motorlager nach Anspruch 1 bis 4, dadurch gekennzeichnet, daß der Kolben (9) nur zwischen Anschlägen (11, 12) des Beschlagteils (8) hin- und herbeweglich ist.

9. Motorlager nach Anspruch 8, dadurch gekennzeichnet, daß der Kolben (9) und/oder die Anschläge (11, 12) auf den einander zugewandten Flächen mit gummielastischen Anschlagpuffern (15) versehen sind.

## Claims

1. An engine mount with hydraulic damping, comprising a fluid-filled working and compensating space which are separated from one another by a flexible partition wall and are connected by a damping opening, the working space and the compensating space being bounded opposite one another in the axial direction by essentially non-deformable pistons, each of which is connected by a fluid-impermeable and elastically deformable annular body to a centrally arranged, annular fitting, the pistons being rigidly connected by a connecting rod which penetrates the partition wall parallel to the direction of motion in the region of an opening, and the partition wall being fixed at the outside on the fitting, characterised in that the piston (9) bounding the compensating space (2) has a piston surface which is at least as large as the piston surface of the partition wall (3), in that the annular body provided between this piston (9) and the fitting (8) is formed by a first rolling diaphragm (6) arched outwards in the axial direction, in that the partition wall (3) comprises a second rolling diaphragm, arched in the axial direction into the working space (1), and in that the second rolling diaphragm is fixed fluid-tightly on the connecting rod (7) in the region of its opening.

2. An engine mount according to claim 1, characterised in that the piston (9) and the first rolling diaphragm (6) merge integrally into one another.

3. An engine mount according to either of claims 1 and 2, characterised in that the first rolling diaphragm (6) is reinforced by a fabric insert.

4. An engine mount according to either of claims 1 and 2, characterised in that the piston (9) is stiffened by a reinforcement (10).

5. An engine mount according to either of claims 1 and 2, characterised in that the partition wall (3) is bounded in the region of the opening by a bead (13) and in that the bead (13) is expanded elastically and pressed against the connecting rod (7) by an internal prestress.

6. An engine mount according to claim 5, characterised in that the bead (13) touches the connecting rod (7) in the region of a groove (14) with a matching profile.

7. An engine mount according to claim 5, characterised in that the bead (13) touches the connecting rod (7) in the region of a cylindrical portion extending parallel to the direction of motion and is displaceable relative to this portion only if extreme deflections occur.

8. An engine mount according to any of claims 1 to 4, characterised in that the piston (9) can be moved backwards and forwards only between stops (11, 12) of the fitting (8).

9. An engine mount according to claim 8, characterised in that the piston (9) and/or the stops (11, 12) are provided on the mutually facing surfaces with rubber-elastic stop buffers (15).

## Revendications

1. Support de moteur à amortissement hydraulique, comportant une chambre de travail et une chambre d'équilibrage remplies de liquide, qui sont séparées l'une de l'autre par une paroi séparatrice flexible et qui sont reliées par un orifice d'amortissement, la chambre de travail et la chambre d'équilibrage étant situées l'une en regard de l'autre dans une direction axiale et étant délimitées vers l'extérieur par des pistons pratiquement indéformables et qui sont respectivement reliés, au moyen d'un corps annulaire, imperméable au liquide et élastiquement déformable, avec une pièce d'entourage de forme annulaire, disposée au centre, les pistons étant reliés rigidement par une tige d'accouplement traversant la paroi séparatrice parallèlement à la direction de mouvement dans la zone d'une ouverture et la paroi séparatrice étant fixée extérieurement sur la pièce d'entourage, caractérisé en ce que le piston (9) délimitant la chambre d'équilibrage (2) comporte une surface de piston, qui est au moins aussi grande que la surface de piston de la paroi séparatrice (3), en ce que le corps annulaire prévu entre ce piston (9) et la pièce d'entourage (8) est constitué par une première membrane enroulable (6), préincurvée vers l'extérieur dans une direction axiale, en ce que la paroi séparatrice (3) se compose d'une seconde membrane enroulable, préincurvée dans une direction axiale dans la chambre de travail (1) et en ce que la seconde membrane enroulable est fixée, dans la zone de son ouverture et de façon étanche au liquide, sur la tige d'accouplement (7).

2. Support de moteur selon la revendication 1, caractérisé en ce que le piston (9) et la première membrane enroulable (6) sont agencés de façon à être mutuellement joints sous forme d'une seule pièce.

3. Support de moteur selon une des revendications 1 et 2, caractérisé en ce que la première membrane enroulable (6) est renforcée par un élément d'insertion en tissu.

4. Support de moteur selon une des revendications 1 et 2, caractérisé en ce que le piston (9) est renforcé par une armature (10).

5. Support de moteur selon une des revendications 1 et 2, caractérisé en ce que la paroi séparatrice (3) est délimitée, dans la zone de l'ouverture par un bourrelet (13) et en ce que ce bourrelet (13) s'élargit élastiquement et est appliqué contre la tige d'accouplement (7) sous l'effet d'une précontrainte interne.

6. Support de moteur selon la revendication 5, caractérisé en ce que le bourrelet 13 est en contact avec la tige d'accouplement (7) dans la zone d'une rainure (14) de profil adapté.

7. Support de moteur selon la revendication 5, caractérisé en ce que le bourrelet (13) est en contact avec la tige d'accouplement (7) dans la zone d'une partie cylindrique s'étendant parallèlement à la direction de mouvement et est déplaçable par rapport à celle-ci seulement lorsqu'il se produit des excursions extrêmes.

8. Support de moteur selon une des revendications 1 à 4, caractérisé en ce que le piston (9) est déplaçable alternativement seulement entre des butées (11, 12) de la pièce d'entourage (8).

9. Support de moteur selon la revendication 8, caractérisé en ce que le piston (9) et/ou les butées (11, 12) sont pourvues de tampons (15), ayant l'élasticité du caoutchouc, sur les surfaces dirigées l'une vers l'autre.
